# EUROPÄISCHE PATENTANMELDUNG

(11) **EP 1 031 376 A1**
(43) Veröffentlichungstag der Anmeldung: **30.08.2000**
(21) Anmeldenummer: 00100714.5
(22) Anmeldetag: 14.01.2000
(51) Int. Cl.: B01J 19/24, B01J 12/00, B01J 35/04, F01N 3/28

(54) **Vorrichtung zur Durchführung einer katalytischen Reaktion**

(30) Priorität: 23.02.1999 DE 19907666
(71) Anmelder: DaimlerChrysler AG, 70567 Stuttgart (DE)
(72) Erfinder: Wiesheu, Norbert, 89312 Günzburg (DE)

(57) **Zusammenfassung**

Vorrichtung zur Durchführung einer katalytischen Reaktion, bei welcher zu reagierende Edukte, insbesondere ein zu reagierendes Reaktionsgemisch durch in einer Trägerstruktur ausgebildete, im wesentlichen parallel verlaufende Kanäle, welche wenigstens teilweise mit Katalysatormaterial belegt sind, durchführbar sind, wobei die Kanäle in Richtung ihrer Längserstreckung versetzt zueinander ausgebildet sind und/oder verschiedene Längserstreckungen aufweisen und/oder verschieden lange bzw. in Längserstreckungsrichtung versetzt zueinander ausgebildete Bereiche, welche mit Katalysatormaterial belegt sind, aufweisen.

## Beschreibung

Die vorliegende Erfindung betrifft eine Vorrichtung zur Durchführung einer katalytischen Reaktion nach dem Oberbegriff des Patentanspruchs 1.

Monolithische Strukturen aus Keramik oder Metall als Trägerstrukturen für Katalysatormaterialien finden bei der katalytischen Behandlung von Gasvolumenströmen breite Verwendung. Derartige Monolithen weisen eine Kanalstruktur auf, wobei eine große Anzahl von Kanälen parallel zueinander verlaufen. Man spricht von einer "wabenförmigen" Anordnung der Kanäle, da diese mit ihren Außenseiten im wesentlichen ohne Ausbildung von Zwischenräumen aneinander liegen. Derartige Wabenstrukturen werden beispielsweise im Abgasstrom eines Verbrennungsmotors positioniert. Hier laufen die zur Abgasreinigung notwendigen chemischen Reaktionen auf den mit Katalysatormaterial beschichten Innenseiten der Kanäle ab.

Da die Konzentration des Abgasgemisches an der Eingangsseite der Kanalstruktur maximal ist und sich erst über die Längserstreckungsrichtung der Kanäle verringert, kommt es im Eingangsbereich der Kanalstruktur bzw. des katalytischen Reaktors zu sehr hohen Umsätzen. Im Falle einer exothermen Reaktion kommt es daher im Eingangsbereich auch zu der größten Abwärme, was zu einer thermischen Überbeanspruchung und schlimmstenfalls zu einem Totalausfall des Bauteils führen kann.

Ein mit einer derartigen monolithischen Struktur ausgebildeter Reaktor ist beispielsweise aus der US 4,844,837 bekannt. Hier dient der Reaktor zur Durchführung einer partiellen Oxidation eines Reaktionsgemisches im Rahmen einer Kohlenwasserstoff-Reformierung. Auch bei einem derartigen Reaktor kommt es zu einer sehr ungleichmäßigen Temperaturverteilung.

Aufgabe der Erfindung ist die Schaffung einer Vorrichtung zur Durchführung einer katalytischen Reaktion, bei welcher örtlich auftretende Temperaturspitzen wirksam vermieden werden können.

Diese Aufgabe wird gelöst durch eine Vorrichtung zur Durchführung einer katalytischen Reaktion mit den Merkmalen des Patentanspruchs 1.

Erfindungsgemäß ist nun eine Vorrichtung zur Durchführung einer katalytischen Reaktion, im folgenden kurz auch als Reaktor bezeichnet, zur Verfügung gestellt, bei welcher beispielsweise aufgrund einer exothermen Reaktion auftretende Temperaturspitzen in wirksamer Weise vermieden werden können, wobei gleichzeitig ein Wärmefluß zur gleichmäßigen Wärmebeaufschlagung der erfindungsgemäßen Vorrichtung ermöglicht wird.

Vorteilhafte Ausgestaltungen der erfindungsgemäßen Vorrichtung sind Gegenstand der Unteransprüche.

Zweckmäßigerweise sind die Kanäle wabenartig, d.h. mit ihren Außenseiten im wesentlichen aneinanderliegend, angeordnet. Mit einer derartigen Wabenstruktur sind besonders klein bauende Reaktoren, welche gleichzeitig einen hohen Umsatz gewährleisten, herstellbar.

Gemäß einer besonders bevorzugten Ausführungsform der erfindungsgemäßen Vorrichtung sind bezüglich der Eintrittsebene der zu reagierenden Edukte mittig liegende Kanäle bezüglich weiter außen liegenden Kanälen in Strömungsrichtung der Edukte versetzt. Unter Eintrittsebene wird hierbei eine eingangsseitig der Vorrichtung bzw. des Reaktors senkrecht zur Strömungsebene der zu reagierenden Edukte liegende Ebene verstanden. Im Falle einer in axialer Richtung im wesentlichen rotationssymmetrischen Vorrichtung kann die axiale Versetzung der Kanäle kegelförmig ausgebildet sein, d.h. die Kanäle bilden eingangsseitig eine im wesentlichen kegelförmige Ausnehmung.

Die vorliegende Erfindung wird nun anhand der Zeichnung im einzelnen erläutert. In dieser zeigt
- Fig. 1: eine schematische seitliche Ansicht einer bevorzugten Ausführungsform der erfindungsgemäßen Vorrichtung,
- Fig. 2: ein über die axiale und radiale Erstreckung der Vorrichtung der Fig. 1 sich ergebendes Temperaturprofil im Falle einer exothermen Reaktion, und
- Fig. 3: ein Schaubild zum Vergleich eines bei der erfindungsgemäßen Vorrichtung auftretenden Temperaturprofils mit einem Temperaturprofil einer herkömmlichen Vorrichtung.

Die erfindungsgemäße Vorrichtung zur Durchführung einer katalytischen Reaktion wird beispielhaft an einem Reaktor für die autotherme Reformierung von Kohlenwasserstoffen beschrieben.

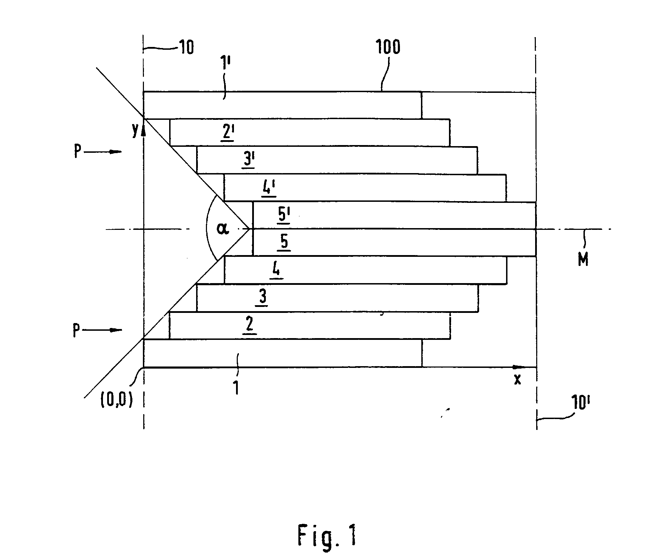

Ein zu reformierenden Kohlenwasserstoff enthaltendes Reaktionsgemisch strömt (Pfeil P) zu diesem Zwecke auf einen geeigneten Reaktor, der in Fig. 1 schematisch dargestellt und mit 100 bezeichnet ist. Eine senkrecht zu der Strömungsrichtung des Reaktionsgemisches liegende Ebene 10 wird hierbei als Eintrittsebene 10 bezeichnet. Der Reaktor 1 ist eine monolithische Struktur aus Keramik oder Metall, und besitzt eine Kanalstruktur, deren einzelne Kanäle mit 1, 1', 2, 2', 3, 3', 4, 4', 5, 5' bezeichnet sind. Die Innenseiten der Kanäle 1 bis 5' sind mit Katalysatormaterial belegt, z.B. beispielsweise mittels Beschichtung, Schüttung, Vliesen usw., an welchem das durchströmende Reaktionsgemisch reagiert.

Man erkennt, daß die einzelnen Kanäle 1 bis 5' im mittleren Bereich der Eintrittsebene 10 bezüglich dieser in Strömungsrichtung des Reaktionsgemisches, d.h. in der Darstellung der Fig. 1 nach rechts, versetzt sind. Bei einer im wesentlichen rotationssymmetrischen Ausbildung des Reaktors 100 um die Achse M ist hierdurch eine kegelförmige Ausnehmung auf der Eintrittsseite des Reaktors gebildet, welche beispielsweise mittels eines Neigungs- bzw. Öffnungswinkels α charakterisiert ist. Hieraus folgt, daß es in den äußeren Kanälen 1 bis 5' bereits früher bzw. näher an der Eintrittsebene zu einer Reaktion des einströmenden Reaktionsgemisches mit dem katalytischen Material der jeweiligen Kanäle 1 bis 5' kommt.

In der Darstellung der Fig. 1 sind sämtliche Kanäle 1 bis 5' mit der gleichen Länge ausgebildet, so daß sich insgesamt eine Struktur ergibt, bei welcher die mittleren Kanäle sich am weitesten nach rechts erstrecken. Es wäre jedoch gleichfalls möglich, die einzelnen Kanäle 1 bis 5' verschieden lang auszubilden, so daß sich beispielsweise (wiederum in der Darstellung der Fig. 1) bei gleicher Ausbildung des Eintrittsbereichs auf der rechten Seite eine einheitliche Abschlußkante ergibt (zur Verdeutlichung mit 10' bezeichnet).

Es wäre ebenfalls möglich, die Kanäle 1 bis 5' selektiv, beispielsweise über verschiedene axiale Bereiche, mit Katalysatormaterial auszubilden, so daß die Kanäle physisch die gleiche Länge, jedoch eine gemäß der Erfindung zueinander versetzte Wirklänge aufweisen.

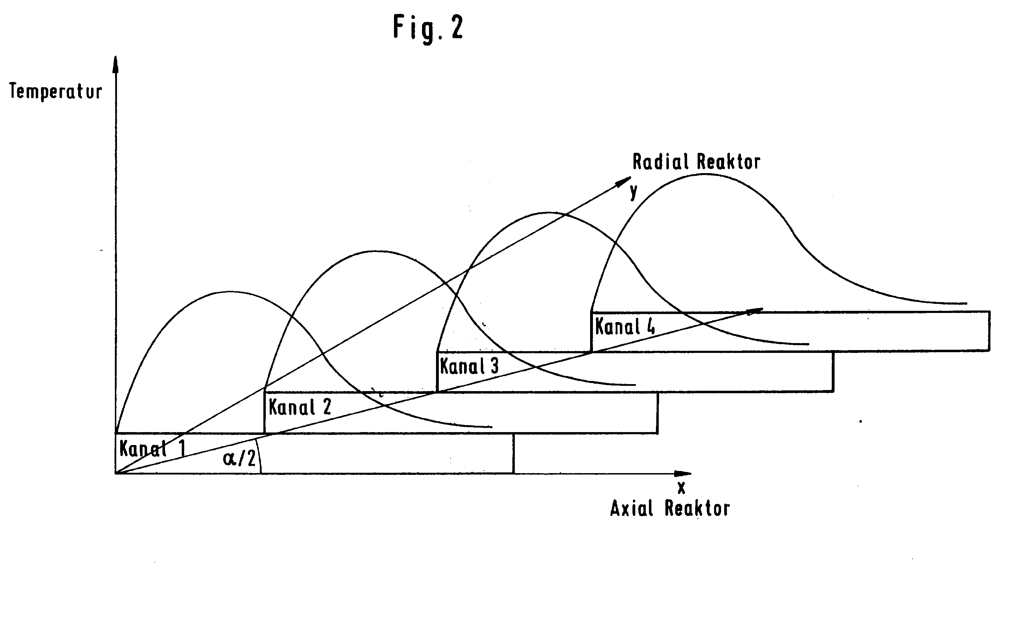

Anhand der Fig. 2 wird nun das bei Verwendung der erfindungsgemäßen Vorrichtung auftretende Temperaturprofil in axialer und radialer Richtung für den Fall einer exothermen Reaktion erläutert. Die X-Achse entspricht hierbei der axialen Länge des Reaktors, die Y-Achse der radialen Erstreckung des Reaktors, und die Z-Achse der auftretenden Temperatur.

In dem äußeren Kanal 1 kommt es bereits kurz hinter der Eintrittsebene (X = 0) aufgrund der exothermen Reaktion zu einem Temperaturanstieg. Der entsprechende Temperaturanstieg in Kanal 2 tritt, entsprechend der axialen Versetzung des Kanals 2, zu etwas größeren X-Werten hin auf. Insgesamt erkennt man in Fig. 2, daß die jeweiligen Temperaturmaxima in den einzelnen Kanälen bei entsprechend den Kanälen versetzten X-Werten auftreten. Zur Verdeutlichung der axialen Versetzung der Kanäle ist der Neigungswinkel der Kanäle bezüglich der Mittelachse M, d.h. α/2 eingezeichnet.

Aufgrund der radialen Versetzung der einzelnen Kanäle (Y-Richtung), kommt es auch in radialer Richtung zu einer gleichmäßigen Verteilung der Temperaturmaxima, wie ebenfalls der Fig. 2 zu entnehmen ist.

Bei einer exothermen Reaktion kommt es insgesamt zu einem Wärmefluß, welcher in zwei Teile aufteilbar ist: Einen größeren Teil, der mit der Gasströmung in axialer Richtung ausgetragen wird, und einen kleineren, der über radiale Wärmeleitung im Trägermaterial quer zur Strömung abgeleitet wird (d.h. in Y-Richtung).

Durch die erfindungsgemäße versetzte Anordnung der Kanäle 1 bis 5' kommt es zu einem axialen und einem radialen Temperaturgradienten, wie dies unter Bezugnahme auf Fig. 2 bereits erläutert wurde. Die erfindungsgemäße Vorrichtung erlaubt daher einen axialen und radialen Wärmeausgleich. Dadurch, daß nicht ausschließlich im axial eingangsseitigen Bereich der Monolithstruktur Wärme erzeugt wird, wie dies bei herkömmlichen Strukturen der Fall war, kann die Gefahr einer thermischen Überhitzung wirksam vermieden werden. Da es über einen insgesamt sehr langen Längserstreckungsbereich der Monolithstruktur zu einer exothermen Reaktion kommt (jeweils in verschiedenen Kanälen), wird erreicht, daß axial weiter stromabwärts liegende Bereiche des Reaktors aufgeheizt werden. Da bei herkömmlichen Vorrichtungen lediglich im vorderen Bereich des Reaktors exotherm Wärme erzeugt wurde, kam es zu einem Aufheizen der stromabwärts liegenden Bereiche mittels durchströmender Gase, wodurch diese Gase bei herkömmlichen Vorrichtungen schnell abgekühlt wurden. Dies kann durch die erfindungsgemäße Längsversetzung der Kanäle vermieden werden.

Aufgrund der exothermen Reaktion wird in jedem Kanal 1 bis 5' jeweils im wesentlichen die gleiche Wärmemenge frei, wobei jedoch aufgrund der Kanal-Längsversetzung und der damit verbundenen Reaktionszonenverschiebung der erwähnte radiale Temperaturgradient entsteht. Hierdurch ist ein radialer Ausgleich der Temperatur ermöglicht, d.h. eine Aufheizung benachbarter Kanäle und eine gleichzeitige Kühlung eines Reaktionskanals im Bereich des aufgrund der exothermen Reaktion entstehenden Temperaturmaximums. Im Falle einer sich an die exotherme Reaktion anschließenden endothermen Reaktion (im Falle der autothermen Reformierung beispielsweise einer sich an eine partielle Oxidation (exotherme Reaktion) überlagernden endothermen Reformierung) sind somit längere Heizzonen für eine derartige Reaktion zur Verfügung gestellt.

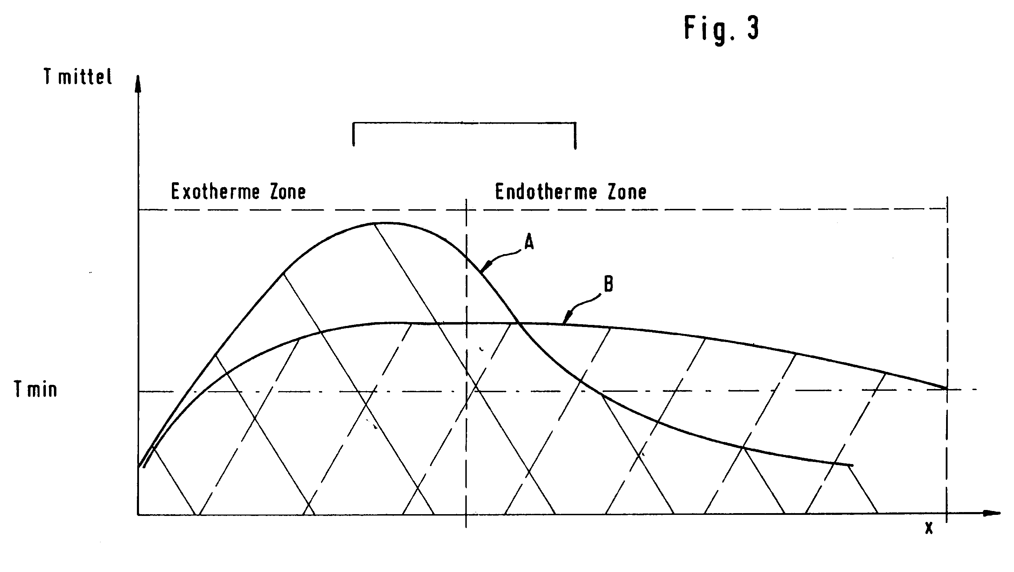

Insgesamt ist mittels der erfindungsgemäßen Vorrichtung eine radiale und axiale Homogenisierung der auftretenden Temperaturprofile zur Verfügung gestellt. Dies sei noch einmal anhand der Fig. 3 erläutert, in der das axiale Temperaturprofil einer erfindungsgemäßen Vorrichtung mit demjenigen einer herkömmlichen Vorrichtung verglichen ist. In dieser Figur ist die mittlere Temperatur gegen die axiale Längserstreckung einer erfindungsgemäßen bzw. einer herkömmlichen Vorrichtung aufgezeichnet.

Die Temperatur Tmittel stellt sich aufgrund der beschriebenen radialen Temperaturausgleichsvorlänge ein. Der Reaktor bzw. die jeweiligen Reaktionskanäle können in eine exotherme Zone (beispielsweise partielle Oxidation) und eine endotherme Zone (beispielsweise Zone einer endothermen Reformierung) eingeteilt werden. Eine minimale Temperatur Tmin, welche zur Durchführung einer endothermen Reaktion bzw. Reformierung notwendig ist, ist in Fig. 3 ebenfalls eingezeichnet. Man erkennt, daß im Falle eines herkömmlichen Reaktors es in der exothermen Zone zu einem starken Temperaturanstieg kommt, und daß der Temperaturverlauf kurz nach dem Anfang der endothermen Zone unter die Temperatur Tmin abfällt (Kurve A). Im Gegensatz hierzu erkennt man, daß im Falle des erfindungsgemäßen Reaktors sowohl die Temperaturspitzen in der exothermen Zone, als auch ein sofortiges Abfallen der Temperatur unter die Temperatur Tmin in der endothermen Zone vermieden wird (Kurve B). Hierdurch ist, wie bereits erwähnt, die axiale Länge der endothermen Zone gegenüber herkömmlichen Reaktoren vergrößert.

Um anzudeuten, daß es in der Praxis zu einer Überlappung der exothermen Reaktion und der endothermen Reaktion kommt, ist in Fig. 3 ein derartiger Überlappungsbereich mittels einer waagerechten eckigen Klammer angedeutet. Ein derartiger Überlappungsbereich kann auch länger oder kürzer als der dargestellte ausgebildet sein.

## Patentansprüche

1. Vorrichtung zur Durchführung einer katalytischen Reaktion, bei welcher zu reagierende Edukte, insbesondere ein zu reagierendes Reaktionsgemisch, durch in einer Trägerstruktur (1) ausgebildete, im wesentlichen parallel verlaufende Kanäle (1, 1', 2, 2', 3, 3', 4, 4', 5, 5'), welche wenigstens teilweise mit Katalysatormaterial belegt sind, durchführbar sind,
**dadurch gekennzeichnet,**
daß die Kanäle (1, 1', 2, 2', 3, 3', 4, 4', 5, 5') in Richtung ihrer Längserstreckung versetzt zueinander ausgebildet sind und/oder verschiedene Längserstreckungen aufweisen und/oder verschieden lange bzw. in Längserstreckungsrichtung versetzt zueinander ausgebildete Bereiche, welche mit Katalysatormaterial belegt sind, aufweisen.

2. Vorrichtung nach Anspruch 1, dadurch gekennzeichnet, daß die Kanäle wabenartig, insbesondere mit ihren Außenseiten aneinander liegend, angeordnet sind.

3. Vorrichtung nach einem der Ansprüche 1 oder 2, dadurch gekennzeichnet, daß bezogen auf die Eintrittsebene (10) der zugeführten Edukte bzw. des zugeführten Reaktionsgemisches mittiger liegende Kanäle (5, 5') bezüglich weiter außen liegender Kanäle (1, 1') in Strömungsrichtung der Edukte bzw. des Reaktionsgemisches versetzt angeordnet sind.
